(19) Europäisches Patentamt
European Patent Office
Office européen des brevets

(11) EP 3 202 570 A1

(12) EUROPEAN PATENT APPLICATION
published in accordance with Art. 153(4) EPC

(43) Date of publication:
09.08.2017 Bulletin 2017/32

(51) Int Cl.:
B32B 27/32 (2006.01)          B29C 55/12 (2006.01)
B65D 65/02 (2006.01)

(21) Application number: 14902907.6

(22) Date of filing: 02.10.2014

(86) International application number:
PCT/JP2014/076376

(87) International publication number:
WO 2016/051566 (07.04.2016 Gazette 2016/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: KOHJIN Film & Chemicals Co., Ltd.
Tokyo 105-0011 (JP)

(72) Inventor: OYAMA, Toshikatsu
Tokyo 105-0011 (JP)

(74) Representative: Hoffmann Eitle
Patent- und Rechtsanwälte PartmbB
Arabellastraße 30
81925 München (DE)

(54) POLYETHYLENE-TYPE THERMALLY SHRINKABLE MULTI-LAYER FILM FOR PACKAGING USE, PACKAGED PRODUCT, AND METHOD FOR PACKAGING SAID PACKAGED PRODUCT

(57) There is provided a polyethylene-based thermally-shrinkable film for pack-in box packaging, in which: a product is not damaged due to breakage or looseness of a film during packaging and transportation of the product; because of the low-temperature shrink characteristic, the product is not exposed to excessively high heat during shrink wrapping and power consumption in a shrink tunnel can be reduced; and because of a small thickness of the film, garbage and other wastes can be reduced.

A polyethylene-based multilayer film, the film is a polyethylene-based thermally-shrinkable multilayer film for pack-in box packaging obtained by biaxial orientation in MD and TD and stretching in MD only further after biaxial orientation. Preferably, the film is a polyethylene-based thermally-shrinkable multilayer film for pack-in box packaging in which the film as a whole has a thickness of 25 μm or less.

FIG. 1

FILM DIRECTION MD
FLOW DIRECTION OF PACKER

**Description**

TECHNICAL FIELD

The present invention relates to a polyethylene-based thermally-shrinkable multilayer film for use in packaging for preventing breakage or other damages during transportation when daily necessities, groceries, magazines, cosmetics, and other products are transported through mail order, a package, and a packaging method.

BACKGROUND ART

When groceries, daily necessities, and other products are purchased through mail order, the products are put into corrugated boxes to be delivered to purchasers. In doing so, cushioning materials are often contained in the corrugated boxes to protect the products from breakage and the like. The cushioning materials are made of various materials such as paper and resin, and most of them are wasted. In recent years, in order to reduce the volume of wastes, to increase the efficiency of packaging work of packing products and cushioning materials, and to reduce the costs, a product is put on a single corrugated board and packaged with a film whereby the product is fixed. There is a method of packaging in which a product and a board having the product fixed thereon are put into a corrugated box (Patent Documents 1 and 2). This packaging method is hereinafter referred to as pack-in box in the invention of the subject application. The automatic packaging for pack-in box is often performed in a sleeve packaging form, in which a product and a board are supplied between two films on the top and bottom and sealed at the front and back. This is because there are a wide variety of sizes and shapes of products, and sleeve packaging only requires the adjustment of the length in MD and enables continuous packaging, whereas in overlap packaging, the size of a temporary package before shrink must be adjusted for each product.

In the sleeve packaging form, a film mainly made from polyethylene and produced by the inflation process is generally used. The film produced by the inflation process is stretched at temperatures equal to or higher than the melting point of the raw material. The film, shrinkable at high temperatures, may not be used for packaging products degradable by heat, such as heat-sensitive paper and chocolate, because the tunnel temperature in shrink wrapping is high. In addition, the film re-melted and shrinking in the tunnel has poor transparency and glossiness to make it difficult to identify the product and the shipment invoice. Moreover, in order to obtain flexibility and stretchability as well as sufficient binding force and strength, the film should have a thickness equal or greater than 30 $\mu$m and produces much waste after use.

A polyethylene-based thermally-shrinkable film for use in overlap packaging as described above is mainly made from polyethylene and produced by, for example, the tubular simultaneous biaxial orientation process or sequential biaxial orientation. This film, oriented at temperatures lower than the melting point of the raw material, is characterized by being shrunken at temperatures lower than the melting point, having high transparency or glossiness and high mechanical strength, and having a relatively small thickness equal to or smaller than 30 $\mu$m. Unfortunately, when packaging is performed with this film in the sleeve packaging form, the packaged product is not covered sufficiently. This is because, since the shrink ratios of MD and TD are almost the same, the film is shrunken in MD to the board size in accordance with the margin ratio, but the shrinkage in TD is free and thus the film is shrunken too much to cover the product sufficiently. Although the shrink ratio in MD is sufficient, the shrink force is not enough to fix the product to the board, and the product may be dropped.

The main packaging method of pack-in box is wrapping a board and a product with a film and then directly putting them into a corrugated box. Otherwise, a board serving as the bottom member of a package and another corrugated sheet serving as the cover member are affixed together with hot-melt adhesive (Patent Document 3). In this method, hot-melt adhesive is directly applied to the film on the bottom member, or adhesive is applied to the corrugated board as the bottom member through holes formed by hot air of a spot heater or an iron heated to a high temperature. Unfortunately, since the film produced by the inflation process is thick and its thermal shrinkage is small, these methods fail to perforate the film or fail to form holes having an adequate size, so that the adhesive may be unable to be directly applied to the bottom member.

Prior Art Documents

Patent Document 1: Japanese Patent Application Publication No. H10-338265 (JP H10-338265 A)
Patent Document 2: Japanese Patent Application Publication No. 2008-13197 (JP 2008-13197 A)
Patent Document 3: International Publication WO 2013/108829

## SUMMARY OF THE INVENTION

### Problems to be Solved by the Invention

It is an object of the present invention to provide a polyethylene-based thermally-shrinkable film for pack-in box, a pack-in box package and a packaging method therefor, in which: a product is not damaged due to breakage or looseness of a film during packaging and transportation of the product; because of the low-temperature shrink characteristic, the product is not exposed to excessively high heat during shrink wrapping and power consumption in a shrink tunnel can be reduced; because of a small thickness of the film, garbage and other wastes can be reduced; when a bottom member and a top member are affixed together, the bottom film is melted and shrunken to facilitate the application of adhesive; and the package is transparent and glossy.

### Means for Solving the Problem

The inventor of the present invention has found that a film that satisfies the required characteristics can be obtained by specifying the raw material and the layer structure of the film and the stretching conditions.
Specifically, the present invention provides:

(1) a polyethylene-based thermally-shrinkable multilayer film for pack-in-box packaging obtained by orienting a polyethylene-based multilayer film through biaxial orientation with a orientation ratio of 3.0 times or more both in MD and TD and thereafter stretching the film to 1.2 to 2.0 times in MD through a hot roll process at temperatures of 60 to 100°C;
(2) the polyethylene-based thermally-shrinkable multilayer film for pack-in-box packaging according to (1) above, characterized in that the polyethylene-based multilayer film includes at least one surface layer composed of linear low-density polyethylene having a density of 0.910 to 0.920 $g/cm^3$ and polymerized with a metallocene-based catalyst and a core layer composed of a composition of 50 to 100% by weight of linear low-density polyethylene having a density of 0.915 to 0.925 $g/cm^3$ and 0 to 50% by weight of high-pressure-processed low-density polyethylene having a density of 0.915 to 0.925 $g/cm^3$;
(3) the polyethylene-based thermally-shrinkable multilayer film for pack-in-box packaging according to (1) or (2) above, characterized in that the high-pressure-processed low-density polyethylene used for the core layer has MFR of 0.3 to 1.0 g/10 minutes;
(4) the polyethylene-based thermally-shrinkable multilayer film for pack-in-box packaging according to (1) to (3) above, characterized in that the film as a whole has a thickness equal to or smaller than 25 $\mu$m and a dimensional change in MD during melting at 160°C is 90% or more;
(5) the polyethylene-based thermally-shrinkable multilayer film for pack-in-box packaging according to any one of (2) to (4) above, characterized in that the film has a haze of 5% or less, a gloss of 120% or more, a thermal shrink ratio at 80°C of 10 to 20% in MD and less than 5% in TD, and a thermal shrink force at 80°C of 0.40 N/cm or more in MD and less than 0.20 N/cm in TD, and the maximum value of hot tack strength measured at 100 to 130°C is 2.5 N/inch or more;
(6) the polyethylene-based thermally-shrinkable multilayer film for pack-in-box packaging according to any one of (2) to (5), characterized in that the film has an interior surface with a friction coefficient of 0.15 or more, impact strength is 0.5 J or more, and piercing strength is 4.0 N or more;
(7) a pack-in-box package comprising the polyethylene-based thermally-shrinkable multilayer film for pack-in-box packaging in (1) to (6);
(8) a pack-in box package comprising a board for producing the package in (7) having a notch at an end portion of the board; and
(9) a packaging method for pack-in box for producing the package according to (8).

### Effects of the Invention

The polyethylene-based thermally-shrinkable film for pack-in-box packaging, the pack-in box package, and the packaging method therefor according to the present invention enable continuous automatic packaging to improve the packaging workability and are suitable in transportation and the like because products are bound enough to avoid packaging collapse. The film is superior in transparency and glossiness after shrink wrapping compared to the conventionally used films produced by the inflation process and therefore provides high display effects. In addition, the low-temperature shrink characteristic can reduce power consumption in a shrink tunnel during shrink. Moreover, the film can be reduced in thickness because it has a sufficient strength. As a result, the amount of film wasted after packaging can be reduced, thereby reducing the load on the environment.

BRIEF DESCRIPTION OF THE DRAWINGS

[FIG. 1] FIG. 1 is an example of the form of pack-in-box packaging in the present invention.
[FIG. 2] FIG. 2 illustrates a tubular orientation process as an example of the manufacturing process of a polyethylene-based thermally-shrinkable multilayer film in the present invention.

MODES FOR CARRYING OUT THE INVENTION

Embodiments of the present invention will be described below.

In the present invention, first of all, an unoriented polyethylene-based multilayer film is subjected to biaxial orientation. The orientation ratios of MD and TD in biaxial orientation are preferably 3.0 times or more. The orientation temperature is a temperature 10 to 30°C lower than the melting point of the raw material, that is, polyethylene, preferably a temperature 10 to 20°C lower. If the orientation ratio is less than 3.0 times and the orientation temperature is a temperature 0 to 10°C lower than the melting point of polyethylene, high transparency and glossiness and sufficient film strength are not achieved. The orientation temperature lower than the melting point of polyethylene by 30°C or more is not preferable because if so, the lateral shrink ratio is too large.

Subsequently, the resultant film after biaxial orientation is subjected to uniaxial stretching only in MD. In this uniaxial stretching, the film is stretched to 1.2 to 2.0 times in MD using a hot roll in a temperature range of 60 to 100°C. This process results in a film that is excellent in low-temperature shrink characteristic, in particular, MD shrink characteristic and is excellent in binding force in pack-in-box packaging. The temperature for performing uniaxial stretching is preferably 60 to 100°C, further preferably 70 to 90°C. With a temperature lower than 60°C, the motor loads such as the hot roll increase and uniaxial stretching is difficult. When uniaxial stretching is performed at a temperature exceeding 100°C, specifically, a temperature close to the melting point of the core layer, sufficient binding force is not achieved because shrinkage in MD is not sufficient and the shrink force is small. The ratio of uniaxial stretching is preferably 1.2 to 2.0 times, further preferably 1.2 to 1.5 times.

When the ratio of uniaxial stretching is less than 1.1 times, the binding force in pack-in-box packaging is insufficient. When the ratio of uniaxial stretching exceeds 2.0 times, the hot roll temperature must be set high in order to prevent breakage of the film on the hot roll or to prevent an increase in roll motor loads. Then, sufficient shrink force is not achieved and the effects of the present invention are lost.

A polyethylene-based resin is used as the raw material in the present invention. Any polyethylene-based resin can be used. A polyethylene-based resin can be used to obtain a film for pack-in-box packaging that has sufficient strength such as tear resistance and is excellent in MD shrink characteristic and binding force through uniaxial stretching.

In particular, when pack-in-box packaging is performed, a film having sufficient binding force and strength, and in addition, low-temperature shrink characteristic is necessary. When such a film is formed in a multilayer structure and the layer structure of the polyethylene-based film is specified, the resultant film satisfies these required characteristics. Such a polyethylene-based multilayer film is a thermally-shrinkable film for pack-in-box packaging, characterized in that at least one of the surface layers is composed of linear low-density polyethylene having a density of 0.910 to 0.920 g/cm$^3$ and polymerized with a metallocene-based catalyst, and the core layer is composed of a composition of 50 to 100 % by weight of linear low-density polyethylene having a density of 0.915 to 0.925 g/cm$^3$ and 0 to 50% by weight of high-pressure-processed low-density polyethylene having a density of 0.915 to 0.925 g/cm$^3$.

Linear low-density polyethylene is used as the resin of the surface layer, in view of film strength and transparency. The linear low-density polyethylene with a metallocene-based catalyst is used to achieve low-temperature sealability, hot-tack property, blocking resistance, and the like. The density of the linear low-density polyethylene is preferably 0.910 to 0.920 g/cm$^3$. With a density lower than 0.910 g/cm$^3$, blocking in a film state is severe to likely cause a trouble in the packaging process. With a density exceeding 0.920 g/cm$^3$, low-temperature sealability cannot be obtained.

Linear low-density polyethylene or a mixture of linear low-density polyethylene and high-pressure-processed low-density polyethylene is used as the resin used of the core layer. The density of the linear low-density polyethylene is preferably 0.915 to 0.925 g/cm$^3$. With a density lower than 0.915 g/cm$^3$, the heat resistance of the entire film is insufficient, so that the film is likely to be whitened or melted and perforated in the shrink tunnel during shrink wrapping. With a density exceeding 0.925 g/cm$^3$, it is difficult to achieve low-temperature shrink characteristic and it becomes necessary to perform shrink wrapping at high temperatures. This is not preferable because the possibility of damaging the product and the power consumption of the shrink tunnel are increased. The density of the high-pressure-processed low-density polyethylene is preferably 0.915 to 0.925 g/cm$^3$, further more preferably 0.915 to 0.920 g/cm$^3$. The high-pressure-processed low-density polyethylene is mixed in order to improve low-temperature shrink characteristic, but the density lower than 0.915 g/cm$^3$ significantly reduces heat resistance. The density exceeding 0.925 g/cm$^3$ significantly reduces the mechanical strength of the film and prevents uniform orientation in biaxial orientation, thereby reducing the thickness accuracy.

When linear low-density polyethylene and high-pressure-processed low-density polyethylene are mixed, a mixture of 50 to 100% by weight of linear low-density polyethylene and 0 to 50% by weight of high-pressure-processed low-density polyethylene is preferable. When the high-pressure-processed low-density polyethylene is mixed, the binding force after shrink wrapping is easily obtained. However, exceeding 50 wt% is not preferable because the mechanical strength of the film is significantly reduced.

When tubular simultaneous biaxial orientation is performed in film production, the MFR of the high-pressure-processed low-density polyethylene is preferably 0.3 to 1.5 g/10 minutes in order to obtain stability of the oriented bubble.

Additives such as slip additive, anti-blocking agent, tackifier, antistatic agent, and anti-fog agent may be added to these polyethylene-based resins as necessary. However, attention is required because if the friction coefficient is too low as described later, the product is easily moved due to vibration or other causes.

A biaxial orientation process and a roll uniaxial stretching process in the present invention will be described in details below. The biaxial orientation for producing a film can be performed by a known method. In this description, a tubular orientation process will be specifically described.

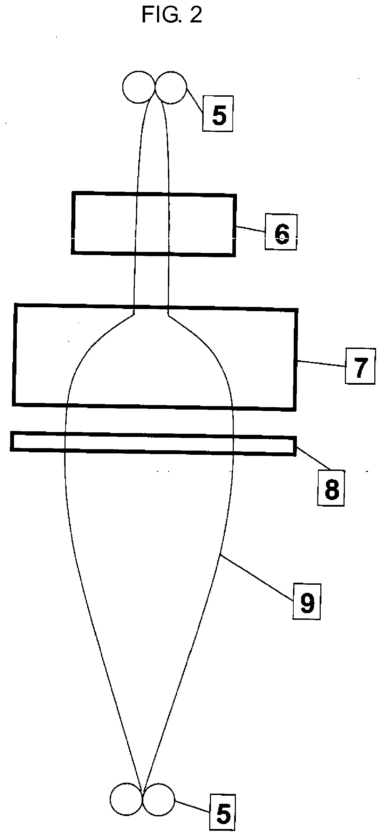

A tubular unoriented film is produced by melting and kneading with three extruders such that the linear low-density polyethylene polymerized with a metallocene-based catalyst is used for both surface layers and the linear low-density polyethylene or the mixture of linear low-density polyethylene and high-pressure-processed low-density polyethylene is used for the core layer, co-extruding the product into a tubular shape with a three-layer annular die, and performing quench solidification without orientation. The resultant tubular unoriented film is supplied to, for example, a tubular orientation apparatus as illustrated in FIG. 2 and oriented in MD with a peripheral speed ratio between two nip rolls in a temperature range that enables high-level orientation, for example, at a temperature 20°C lower than the melting point of the core layer, preferably 10°C lower than the melting point. At the same time, gas pressure is applied to the inside of the tube to expand and be oriented in TD, thereby causing simultaneous biaxial orientation. The orientation ratio is preferably 3.0 times or more in both MD and TD in order to obtain the characteristics such as high strength and transparency.

After the tubular orientation process, the film is stretched to 1.2 to 2.0 times in MD between a heat roll at 60 to 100°C and a cold roll at 20 to 40°C and thereafter subjected to annealing. A heat roll and a cold roll may be combined into a pair, or two or more pairs may be formed. The product thickness is adjusted by the thickness of the tubular unoriented film to a final thickness of 25 μm or less, considering the strectching ratio of tubular orientation or roll uniaxial stretching.

In order to obtain the effects of the present invention satisfactorily, the thickness is 25 μm or less, preferably 15 μm or more and 20 μm or less, and a dimensional change in MD during melting at 160°C should be 90% or more. If a film thickness exceeds 25 μm and a dimensional change during melting is less than 90%, adhesive is unable to be applied when the bottom member and the cover member are affixed together, because the time taken to melt the film increases and hot air blown to the film with a spot heater does not perforate the film. The temperature of hot air of the spot heater, the temperature of the hot-melt adhesive, and the temperature of the iron are higher than the melting point of the film, for example, 160°C or higher. The dimensional change in MD during melting at 160°C is preferably 90% or more, because if so, the film is shrunken in volume and an opening is formed in the perforated portion, through which adhesive can be directly applied to the bottom member. In the examples of the subject application, such film performance is evaluated in terms of melting perforation characteristic.

The film according to the present invention has characteristics of a haze of 5% or less and a gloss of 120% or more, a thermal shrink ratio at 80°C of 10 to 20% in MD and less than 5% in TD, and a thermal shrink force at 80°C of 0.40 N/cm or more in MD and less than 0.20 N/cm in TD. Since the film is stretched at a temperature lower than the melting point of the raw material, the film achieves high transparency and glossiness and is superior to a film produced by the conventional inflation process.

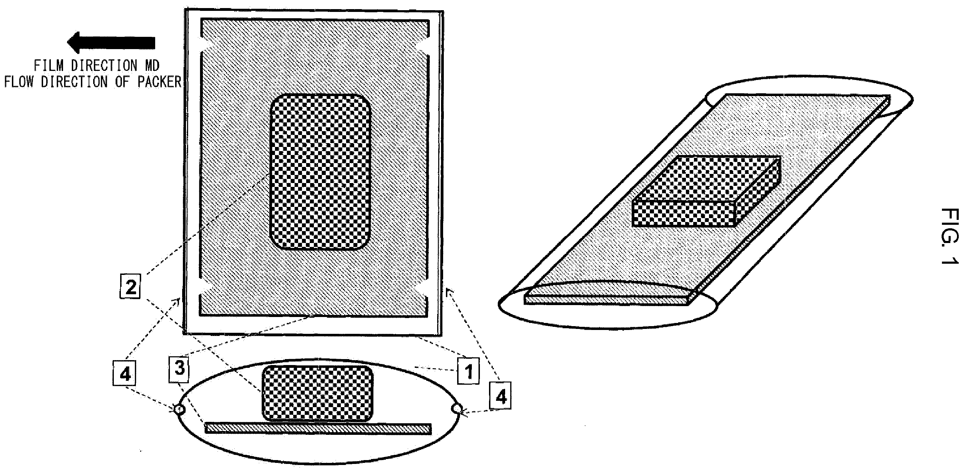

The thermal shrink ratio and the thermal shrink force are adjusted by the density and the melting point of the core layer raw material, and the temperature and the stretching ratio of tubular orientation and roll uniaxial stretching. With the MD uniaxial stretching temperature of 60 to 100°C and the MD stretching ratio of 1.2 to 2.0 times, an unbalanced film is obtained such that the MD dimensional change during melting at 160°C is 90% or more, the thermal shrink ratio at 80°C is 10 to 20% in MD and less than 5% in TD, the thermal shrink force at 80°C is 0.40 N/cm or more in MD and less than 0.20 N/cm in TD. Since the shrinkage in MD provides binding performance and tightness and at the same time there is no excessive shrinkage in TD, the resultant film is suitable for pack-in-box packaging. Further, in the packaging as illustrated in FIG. 1, the top film is not shrunken and becomes redundant to make the appearance bad. Therefore, the thermal shrink ratio at 120°C is preferably 50% or more in both MD and TD.

The film according to the present invention is characterized in that the maximum value of hot tack strength measured at 100 to 130°C is 2.5N/inch or more, preferably 3.0 N/inch or more. The hot tack characteristic is improved by using the linear low-density polyethylene with a metallocene-based catalyst for the surface layer. If the hot tack strength is less than 2.5 N/inch, when the package enters the shrink tunnel after sealing in automatic packaging, the seal is easily detached to cause many package defects. As a result, stable continuous packaging is not achieved, and the workability is significantly reduced.

The film according to the present invention is characterized in that the friction coefficient of the film internal surface is 0.15 or more, the impact strength is 0.5 J or more, and the piercing strength is 4.0 N or more. If the film interior surface has a friction coefficient less than 0.15 and is slippery, the product is displaced and loosened although being fixed with the binding force of the film. If the impact strength or the piercing strength is not sufficient, the film is ripped in some products.

The board used in producing a package in the present invention is preferably shaped to have notches at its ends as illustrated in FIG. 1. This is because when the film according to the present invention is shrunken in the shrink tunnel, the film is first shrunken in MD to allow the film ends to intrude into the notches, and the film is thereafter shrunken in TD, thereby facilitating fixing of the product. In the absence of notches, the binding performance may be reduced because the film width may become smaller than the width of the product due to the shrinkage in TD and thus the film is unable to cover the entire product.

Examples

The present invention will be described in further details below. The mechanical properties and physical properties in the present invention and examples were measured by the following methods.

<Thickness> The thickness of the film was measured in conformity with JIS Z 1709.
<Haze> The transparency of the film was measured in conformity with JIS K 7105.
<Gloss> The glossiness of the film was measured in conformity with JIS K 7105.
<Shrink ratio> The film was measured in terms of MD and TD in conformity with JIS Z 1709.

<Dimensional change during melting>

The melting point of the film according to the present invention is 110 to 130°C, and a dimensional change of the film melted sufficiently at a temperature higher than this temperature range was measured at 160°C. The film was cut into 20 cm of MD and 20 cm of TD and kept in an oven at 160°C for 30 minutes to be melted. The length of L1 cm of MD was then measured. The dimensional change was calculated by the equation below.

$$\text{Dimensional change (\%)} = (20 - L1)/20 \times 100$$

<Shrink force> The film was measured in terms of MD and TD in conformity with ASTM D 2838.
<Hot tack strength> THELLER HOT TACK tester was used in measurement, based on ASTM F-1921-98. The measurement was performed using a 0.5-inch wide flat seal die at temperatures of 100 to 130°C, and a test piece had a width of 1.0 inch. The hot tack seal strength changing over time after peel was plotted in the order of 1/1000 seconds and measured with a seal strength 0.25 seconds after the start of peel. In addition, the seal strength 0.25 seconds after the start of peel was plotted against the temperature, and its maximum value was obtained.
<Friction coefficient> The slippage of the film was measured in conformity with ASTM D 1894.
<Impact strength> The film was measured in terms of MD and TD in conformity with JIS P 8134.
< Piercing strength > The piercing strength of the film was measured in conformity with JIS Z 1707.
<Heat resistance during packaging> Whether the film is whitened due to melting during heating was determined by visual inspection.
○: No whitening
Δ: Looks white and foggy as a whole.
×: Locally significantly whitened, and the film strength is degraded or the film is perforated.
<Finish in packaging> The finished state of the top surface after packaging was evaluated by visual inspection.
○: Good
Δ: Minute wrinkles are observed on the top surface.
×: The film is wrinkled or peeled on the top surface or other portions, or the film is loose.

<Melting perforation characteristic>

The state of perforation when hot air of 200°C is blown with a spot heater to the film on the bottom member, in the packaging form in which the bottom member and the cover member are affixed together.

○: Holes with an adequate shape and size are formed to allow adhesive to be applied to the board.
Δ: Partially perforated, but the holes are not expanded so that adhesive is unable to be applied to the board.
✕: Not perforated.

<Binding performance immediately after packaging>

Evaluated by the bound state of the packaged product after packaging.

○: Good
Δ: Small looseness
✕: Large looseness, or the packaged product drops off the film.

<Binding performance after transport>

The binding state was evaluated after the packaged product was transported.

○: Good
Δ: Small looseness
✕: Large looseness, or the packaged product drops off the film.

<Breakage after transport >

The breakage state was evaluated after the packaged product was transported.

○: Film has no breakage.
Δ: Film has small breakage.
✕: Film has large breakage.

The kinds of raw materials used in Examples and Comparative Examples are as follows.

LL 1: Linear low-density polyethylene having C6 comonomer and polymerized with a metallocene-based catalyst, with a density of 0.913 g/cm$^3$
LL2: Linear low-density polyethylene having C6 comonomer and polymerized with a metallocene-based catalyst, with a density of 0.918 g/cm$^3$
LL3: Linear low-density polyethylene having C8 comonomer and polymerized with a Ziegler-based catalyst, with a density of 0.920 g/cm$^3$
LL4: Linear low-density polyethylene having C6 comonomer and polymerized with a Ziegler-based catalyst, with a density of 0.920 g/cm$^3$
LL5: Linear low-density polyethylene having C6 comonomer and polymerized with a Ziegler-based catalyst, with a density of 0.925 g/cm$^3$
LD1: High-pressure-processed low-density polyethylene with a density of 0.915 g/cm$^3$
LD2: High-pressure-processed low-density polyethylene with a density of 0.924 g/cm$^3$
LD3: High-pressure-processed low-density polyethylene with a density of 0.920 g/cm$^3$

<Example 1>

As listed in Table 1, a linear low-density polyethylene resin having a density of 0.913 g/cm$^3$ and polymerized with a metallocene-based catalyst was used for both surface layers, and 80% by weight of a linear low-density polyethylene resin having a density of 0.920 g/cm$^3$ and 20% by weight of a high-pressure-processed low-density polyethylene resin having a density of 0.924 g/cm$^3$ were used for the core layer. The resins were melt-kneaded with three extruders (for the core layer, for the innermost layer, and for the outermost layer) at 170°C to 240°C. The amount extruded in each extruder was set such that the ratio of the thickness of the core layer to the total thickness of the layers was 80%. The resins were co-extruded downward through a three-layer annular die kept at 240°C. The formed three-layered tubular melted resin was hauled off while the inside was slid on the outer surface of a cylindrical cooling mandrel with cooling water circulated therein and the outside was passed through a water tank to be cooled, thereby yielding an unoriented film. The number of screw revolutions and the haul-off rate of the extruder were adjusted such that the finally obtained film had a thickness of 10 μm. This tubular unoriented film was guided to the tubular biaxial orientation apparatus illustrated in FIG. 2, oriented to 3.0 times in MD and 3.0 times in TD at 100 to 110°C, and thereafter cooled to 40°C or lower and folded into two. This oriented film was then guided to a hot roll apparatus and stretched to 1.2 times between a heat roll at 60°C and a cold roll at 30°C, and then underwent a relaxation process to a degree of a few percent with a hot roll appropriately adjusted to 30 to 40°C. The stability of the oriented bubble during tubular biaxial orientation was good and vertical movement of the orientation point or swings of the oriented tube were not observed. A nonuniform stretching state such as necking was not observed in hot roll uniaxial stretching. The resultant stretched film had the characteristics as listed in Table 1, namely, high transparency and glossiness and extremely excellent low-temperature shrink characteristic. Using this film, three comic books were packaged with an automatic packer in the packaging form illustrated in FIG. 1. In the automatic packaging, no seal failure occurred, the shrink-finished state was satisfactory with a relatively low shrink tunnel temperature, and continuous packaging was achieved. The resultant packaged product had the three books firmly fixed without breakage or whitening of the film and had transparency. Hot air at 200°C was blown to the bottom surface of the packaged product to form holes with an adequate size in the film, through which adhesive was able to be directly applied to the board to affix the cover member firmly. Looseness or breakage was not found when the packaged product was transported.

<Example 2>

As listed in Table 1, an unoriented film was obtained in the same manner as in Example 1 except that a linear low-density polyethylene resin having a density of 0.918 g/cm$^3$ and polymerized with a metallocene-based catalyst was used for both surface layers, and 50% by weight of a linear low-density polyethylene resin having a density of 0.925 g/cm$^3$ and 50% by weight of a high-pressure-processed low-density polyethylene resin having a density of 0.915 g/cm$^3$ were used for the core layer. This tubular unoriented film was subjected to tubular biaxial orientation in the same manner as in Example 1, then stretched to 2.0 times between two rolls, namely, a heat roll at 100°C and a cold roll at 30°C, and thereafter underwent a relaxation process to a degree of a few percent with a hot roll appropriately adjusted to 30 to 70°C. The stability of the oriented bubble during orientation was good and vertical movement of the orientation point or swings of the oriented tube were not found. A nonuniform stretching state such as necking was not observed. The resultant stretched film had the characteristics as listed in Table 1, namely, high transparency and glossiness and extremely excellent low-temperature shrink characteristic. Using this film, three comic books were packaged with an automatic packer in the packaging form illustrated in FIG. 1. There was no problem in the automatic packaging, and continuous packaging was achieved. In the resultant packaged product, three comic books were firmly fixed, breakage or whitening of the film was not found, and the shrink finished state was satisfactory with a relatively low shrink tunnel temperature. Hot air at 200°C was blown to the bottom surface of the packaged product to form holes with an adequate size in the film, through which adhesive was directly applied to the board to affix the cover member firmly. Looseness or breakage was not found when the packaged product was transported.

<Example 3>

As listed in Table 1, an unoriented film was obtained in the same manner as in Example 1 except that a linear low-density polyethylene resin having a density of 0.913 g/cm$^3$ and polymerized with a metallocene-based catalyst was used for both surface layers, and a linear low-density polyethylene resin having a density of 0.920 g/cm$^3$ was used for the core layer. The number of screw revolutions and the haul-off rate of the extruder were adjusted such that the finally obtained film had a thickness of 15 μm. This tubular unoriented film was guided to the tubular biaxial orientation apparatus illustrated in FIG. 2, oriented to 4.0 times in MD and 4.0 times in TD at 100 to 110°C, and then cooled to 40°C or lower and folded into two. This oriented film was then guided to a hot roll apparatus, stretched to 1.5 times between two rolls, namely, a heat roll at 80°C and a cold roll at 30°C, and then underwent a relaxation process to a degree of a few percent with a hot roll appropriately adjusted to 30 to 40°C. The stability of the oriented bubble during orientation was good and vertical movement of the orientation point or swings of the oriented tube were not found. A nonuniform stretching state such as necking was not observed. The resultant stretched film had the characteristics as listed in Table 1, namely, high transparency and glossiness and extremely excellent low-temperature shrink characteristic. Using this film, three comic books were packaged with an automatic packer in the packaging form illustrated in FIG. 1. There was no problem in the automatic packaging, and continuous packaging was achieved. In the resultant packaged product, three comic books were firmly fixed, breakage or whitening of the film was not found, and the shrink finished state was satisfactory with a relatively low shrink tunnel temperature. Hot air at 200°C was blown to the bottom surface of the packaged product to make holes with an adequate size in the film, through which adhesive was applied to the board to affix the cover member firmly. Looseness or breakage was not found when the packaged product was transported.

<Example 4>

As listed in Table 1, an unoriented film was obtained in the same manner as in Example 1 except that a linear low-density polyethylene resin having a density of 0.918 g/cm$^3$ and polymerized with a metallocene-based catalyst was used for both surface layers, and 80% by weight of a linear low-density polyethylene resin having a density of 0.925 g/cm$^3$ and 20% by weight of a high-pressure-processed low-density polyethylene resin having a density of 0.920 g/cm$^3$ were used for the core layer. The number of screw revolutions and the haul-off rate of the extruder were adjusted such that the finally obtained film had a thickness of 25 μm. A stretched film was obtained in the same manner as in Example 2 except that the tubular unstretched film was stretched to 1.2 times with a hot roll apparatus. The stretched film had the characteristics as listed in Table 1, namely, high transparency and glossiness and extremely excellent low-temperature shrink characteristic. Using this film, three comic books were packaged with an automatic packer in the packaging form illustrated in FIG. 1. There was no problem in the automatic packaging, and continuous packaging was achieved. In the resultant packaged product, three comic books were firmly fixed, breakage or whitening of the film was not found, and the shrink finished state was satisfactory with a relatively low shrink tunnel temperature. Looseness or breakage was not found in the packaged product directly put into a corrugated box and transported.

<Comparative Example 1>

As listed in Table 1, a streched film was obtained in the same manner as in Example 3 except that a linear low-density polyethylene resin having a density of 0.920 g/cm$^3$ and polymerized with a Ziegler-based catalyst was used for both surface layers, a linear low-density polyethylene resin having a density of 0.920 g/cm$^3$ was used for the core layer, and the orientation ratio in tubular simultaneous biaxial orientation was 2.5 times in MD and 2.5 times in TD. The stretched film had the characteristics as listed in Table 2, namely, high transparency and glossiness and a sufficient shrink force, but the impact strength and the piercing strength were low and the hot tack strength was also low. Using this film, three comic books ware packaged with an automatic packer in the packaging form illustrated in FIG. 1. In the automatic packaging, in some packages, the seal was kept before entering the shrink tunnel but opened after passing through the shrink tunnel. The resultant packaged product with the seal not opened slightly lacked film shrinkage and looked bad. Although blowing hot air at 200°C to the bottom surface of the packaged product made holes, the holes were too small to apply a sufficient amount of hot-melt adhesive to the board, and the cover member was unable to be affixed firmly. Although the three books were fixed firmly, the film was broken at the corner of the books when the packaged product was transported.

<Comparative Example 2>

A stretched film was obtained in the same manner as in Example 3 except that the film was stretched to 1.5 times in MD with a hot roll at 105°C. The stretched film had the characteristics as listed in Table 2, namely, high transparency and glossiness, but the shrink ratio and the shrink force in MD were low. Using this film, three comic books were packaged with an automatic packer in the packaging form illustrated in FIG. 1. There was no problem in the automatic packaging, and continuous packaging was achieved. The resultant packaged product lacked shrinkage and looked bad, and the fixing of the three books was not sufficient. Although blowing hot air at 200°C to the bottom surface of the packaged product made holes, the holes were too small to apply hot-melt adhesive to the board, and the cover member was unable to be affixed. When the packaged product was directly put into a corrugated box and transported, the film was further loosened and broken at the corners of the books to expose the contents.

<Comparative Example 3>

The process is similar to Example 3 except that the film was stretched to 1.5 times in MD with a hot roll at 50°C. However, the load on the driving motor of the hot roll was too much increased, so that a stretched film failed to be obtained.

<Comparative Example 4>

A stretched film was obtained in the same manner as in Example 3 except that the film was stretched to 1.0 time in MD with a hot roll at 80°C. The stretched film had the characteristics as listed in Table 2, namely, high transparency and glossiness, but the shrink ratio and the shrink force in MD were low. Using this film, three comic books were packaged with an automatic packer in the packaging form illustrated in FIG. 1. There was no problem in the automatic packaging, and continuous packaging was achieved. The resultant package lacked shrinkage and looked bad, and the fixing of the three books was not sufficient. Although blowing hot air at 200°C to the bottom surface of the packaged product made holes, the holes were too small to apply a sufficient amount of hot-melt adhesive to the board, and the cover member was unable to be affixed firmly. When transported, the film was not broken but further loosened to expose the contents, in some packages.

<Comparative Example 5>

The process is similar to Example 3 except that the film was stretched to 2.5 times in MD with a hot roll at 100°C. However, the load on the driving motor of the hot roll was too much increased, the film was ruptured, and a stretched film failed to be obtained.

[Table 1]

| | | Example 1 | Example 2 | Example 3 | Example 4 | Comparative Example 1 | Comparative Example 2 | Comparative Example 3 | Comparative Example 4 | Comparative Example 5 |
|---|---|---|---|---|---|---|---|---|---|---|
| Raw material composition | Surface layer | LL1 | LL2 | LL1 | LL2 | LL3 | LL1 | LL1 | LL1 | LL1 |
| | Core | LL4 | LL5 | LL4 | LL5 | LL4 | LL4 | LL4 | LL4 | LL4 |
| | layer | LD2 | LD1 | - | LD3 | - | - | - | - | - |
| LDPE blend ratio | % | 20 | 50 | 0 | 20 | 0 | 0 | 0 | 0 | 0 |
| Core layer thickness ratio | % | 80 | 80 | 80 | 80 | 80 | 80 | 80 | 80 | 80 |
| Thickness | $\mu$m | 10 | 10 | 15 | 25 | 15 | 15 | 15 | 15 | 15 |
| MD orientation ratio | times | 3.0 | 3.0 | 4.0 | 3.0 | 2.5 | 3.0 | 3.0 | 3.0 | 3.0 |
| TD orientation ratio | times | 3.0 | 3.0 | 4.0 | 3.0 | 2.5 | 3.0 | 3.0 | 3.0 | 3.0 |
| Stretching temperature | | 60.0 | 100.0 | 80.0 | 100.0 | 80.0 | 105.0 | 50.0 | 80.0 | 100.0 |
| Stretching ratio | times | 1.2 | 2.0 | 1.5 | 1.2 | 1.5 | 1.5 | 1.5 | 1.0 | 2.5 |
| Physical property values | | | | | | | | | | |
| Haze | % | 2.0 | 2.3 | 2.1 | 4.5 | 2.0 | 4.0 | - | 5.1 | - |
| Gloss | % | 150 | 145 | 155 | 130 | 150 | 125 | - | 130 | - |
| 80°C shrink ratio MD | % | 17 | 19 | 18 | 15 | 15 | 6 | - | 5.0 | - |
| 80°C shrink ratio TD | % | 3 | 2 | 3 | 4 | 3 | 1 | - | 5.2 | - |
| 120°C shrink ratio MD | % | 77 | 85 | 80 | 74 | 65 | 55 | - | 82 | - |
| 120°C shrink ratio TD | % | 70 | 65 | 70 | 71 | 55 | 45 | - | 70 | - |
| 80°C shrink force MD | N/cm | 0.60 | 0.70 | 0.80 | 0.50 | 0.60 | 0.07 | - | 0.11 | - |
| 80°C shrink force TD | N/cm | 0.10 | 0.10 | 0.09 | 0.13 | 0.10 | 0.05 | - | 0.12 | - |

| | | Example 1 | Example 2 | Example 3 | Example 4 | Comparative Example 1 | Comparative Example 2 | Comparative Example 3 | Comparative Example 4 | Comparative Example 5 |
|---|---|---|---|---|---|---|---|---|---|---|
| Hot tack strength Maximum value in 100 to 130°C | N/inch | 4.3 | 3.8 | 4.6 | 3.9 | 2.3 | 4.2 | - | 4.5 | - |
| Friction coeffcient | | 3.20 | 0.50 | 7.00 | 3.50 | 3.20 | 3.50 | - | 0.11 | - |
| Impact strength | J | 0.60 | 0.90 | 0.70 | 0.50 | 0.20 | 0.30 | - | 0.53 | - |
| Pierce force | N | 4.70 | 5.60 | 5.60 | 4.20 | 2.80 | 3.20 | 3.20 | 3.7 | - |
| Evaluation in sleeve packaging | | | | | | | | | | |
| Sealability | | ○ | ○ | ○ | ○ | × | ○ | - | ○ | - |
| Heat resistance | | ○ | ○ | ○ | ○ | Δ | ○ | - | ○ | - |
| Finish | | ○ | ○ | ○ | ○ | Δ | × | - | Δ | - |
| Binding performance before transport | | ○ | ○ | ○ | ○ | ○ | × | - | × | - |
| Binding performance after transport | | ○ | ○ | ○ | ○ | Δ | × | - | × | - |
| Breakage resistance after transport | | ○ | ○ | ○ | ○ | × | × | - | ○ | - |

EP 3 202 570 A1

12

INDUSTRIAL APPLICABILITY

The polyethylene-based thermally-shrinkable multilayer film for pack-in-box packaging, and the pack-in box package and the packaging method therefor according to the present invention can be used for pack-in-box packaging for the purpose of transportation. In particular, with low-temperature shrink characteristic, power consumption of the shrink tunnel is low, and because of a small film thickness, the film is reduced in volume and has high transparency and glossiness to enable packaging that facilitates visual inspection of the product and looks good.

Description of the Reference Numerals

1 Film in pack-in-box packaging
2 Packaged product (product) in pack-in-box packaging
3 Corrugated board in pack-in-box packaging
4 Melted seal portion of film in pack-in-box packaging
5 Nip roll of tubular orientation apparatus
6 Preheater of tubular orientation apparatus
7 Main heater of tubular orientation apparatus
8 Cooling air ring of tubular orientation apparatus
9 Film in tubular orientation

**Claims**

1. A polyethylene-based thermally-shrinkable multilayer film for pack-in-box packaging obtained by orienting a polyethylene-based multilayer film through biaxial orientation with a orientation ratio of 3.0 times or more both in MD and TD and then stretching the film to 1.2 to 2.0 times in MD through a hot roll process at temperatures of 60 to 100°C. the polyethylene-based thermally-shrinkable multilayer film **characterized in that**
the polyethylene-based multilayer film includes at least one surface layer composed of linear low-density polyethylene having a density of 0.910 to 0.920 g/cm$^3$ and polymerized with a metallocene-based catalyst and a core layer composed of a composition of 50 to 100% by weight of linear low-density polyethylene having a density of 0.915 to 0.925 g/cm$^3$ and 0 to 50% by weight of high-pressure-processed low-density polyethylene having a density of 0.915 to 0.925 g/cm$^3$.

2. The polyethylene-based thermally-shrinkable multilayer film for pack-in-box packaging according to claim 1, **characterized in that** the high-pressure-processed low-density polyethylene used for the core layer has MFR of 0.3 to 1.0 g/10 minutes.

3. The polyethylene-based thermally-shrinkable multilayer film for pack-in-box packaging according to claim 1 or 2, **characterized in that** the film as a whole has a thickness equal to or smaller than 25 μm and a dimensional change in MD during melting at 160°C is 90% or more.

4. The polyethylene-based thermally-shrinkable multilayer film for pack-in-box packaging according to claim 2 or 3, **characterized in that** the film has a haze of 5% or less, a gloss of 120% or more, a thermal shrink ratio at 80°C of 10 to 20% in MD and less than 5% in TD, and a thermal shrink force at 80°C of 0.40 N/cm or more in MD and less than 0.20 N/cm in TD, and hot tack strength measured at 110 to 120°C is 2.0 N/inch or more.

5. The polyethylene-based thermally-shrinkable multilayer film for pack-in-box packaging according to any one of claims 2 to 4, **characterized in that** the film has an interior surface with a friction coefficient of 0.15 or more, impact strength is 0.5 J or more, and piercing strength is 4.0 N or more.

6. A pack-in-box package comprising the polyethylene-based thermally-shrinkable multilayer film for pack-in-box packaging according to any one of claims 1 to 5.

7. A pack-in box package comprising a board used for producing the package according to claim 6 having a notch at an end portion of the board.

8. A packaging method for pack-in box for producing the package according to claim 7.

# FIG. 1

FIG. 2

## INTERNATIONAL SEARCH REPORT

| International application No. |
|---|
| PCT/JP2014/076376 |

A.  CLASSIFICATION OF SUBJECT MATTER
*B32B27/32*(2006.01)i, *B29C55/12*(2006.01)i, *B65D65/02*(2006.01)i

According to International Patent Classification (IPC) or to both national classification and IPC

B.  FIELDS SEARCHED

Minimum documentation searched (classification system followed by classification symbols)
B32B1/00-43/00, B29C55/00-55/30, B65D65/00-65/46

Documentation searched other than minimum documentation to the extent that such documents are included in the fields searched
Jitsuyo Shinan Koho          1922-1996   Jitsuyo Shinan Toroku Koho   1996-2015
Kokai Jitsuyo Shinan Koho    1971-2015   Toroku Jitsuyo Shinan Koho   1994-2015

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | JP 2013-123820 A  (Kohjin Holdings Co., Ltd.),<br>24 June 2013 (24.06.2013),<br>claims; paragraph [0014]<br>(Family: none) | 1-8<br>7,8 |
| X<br>Y | JP 2011-116033 A  (Kohjin Co., Ltd.),<br>16 June 2011 (16.06.2011),<br>claims; paragraph [0019]; fig. 1<br>(Family: none) | 1-6<br>7,8 |
| A | JP 2002-370327 A  (Okura Industrial Co., Ltd.),<br>24 December 2002 (24.12.2002),<br>claims; paragraph [0007]<br>(Family: none) | 1-8 |

| ☒  Further documents are listed in the continuation of Box C. | ☐  See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 March 2015 (09.03.15) | 17 March 2015 (17.03.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | |
| | Telephone No. |

Form PCT/ISA/210 (second sheet) (July 2009)

**INTERNATIONAL SEARCH REPORT**

International application No.

PCT/JP2014/076376

C (Continuation).　DOCUMENTS CONSIDERED TO BE RELEVANT

| Category* | Citation of document, with indication, where appropriate, of the relevant passages | Relevant to claim No. |
|---|---|---|
| A | JP 2003-523290 A (Sporos SA), 05 August 2003 (05.08.2003), claims; paragraphs [0053] to [0063] & US 2003/0157355 A1 & EP 1296817 A1 & WO 2001/043962 A1 & AU PQ466599 D0 & AU 2129601 A & AU 771849 B & CN 1411409 A | 1-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10338265 B
- JP H10338265 A
- JP 2008013197 A
- WO 2013108829 A